# EUROPEAN PATENT APPLICATION

(11) **EP 4 450 328 A1**
(43) Date of publication of application: **23.10.2024**
(21) Application number: 22907782.1
(22) Date of filing: 01.12.2022
(51) Int. Cl.: B60N 2/68, B60R 22/18

(54) **SEAT BACK**

(30) Priority: 13.12.2021 KR 20210177760
(71) Applicant: POSCO Co., Ltd, Pohang-si, Gyeongsangbuk-do 37859 (KR)
(72) Inventor: KIM, Jaehyun, Incheon 21985 (KR)
(74) Representative: Meissner Bolte Partnerschaft mbB
(86) International application number: PCT/KR2022/019359
(87) International publication number: WO 2023/113313

(57) **Abstract**

The present invention provides a seat back comprising: an upper frame; a first side frame coupled to one side of the upper frame; and a first belt bracket which is coupled to a section at which the upper frame and the first side frame are connected, and which guides a seat belt. The first belt bracket comprises: a front bracket disposed in front of the section at which the upper frame and the first side frame are connected; and a rear bracket which is manufactured so as to be separable from the front bracket, is coupled to the front bracket, and is disposed behind the section at which the upper frame and the first side frame are connected.

## Description

### Technical Field

The present invention relates to a seat back.

### Background Art

It should be noted that the content described in this section merely provides background information on the present invention and does not constitute a prior art.

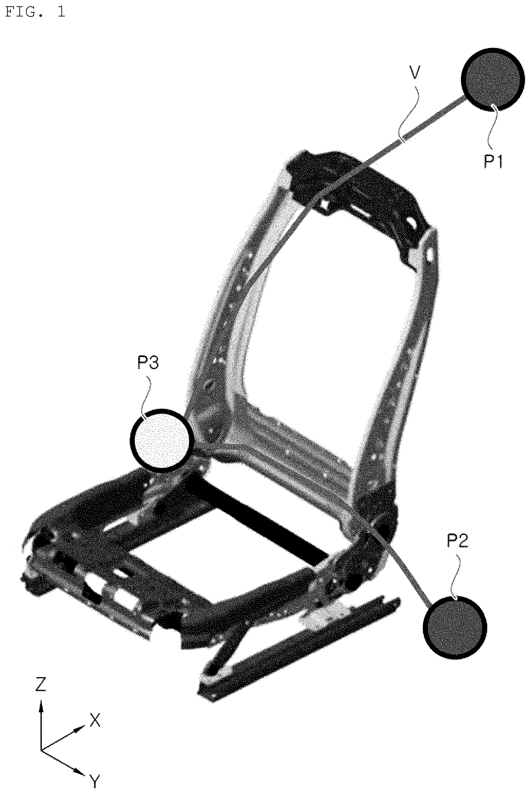

FIG. 1 is a conventional vehicle seat that does not rotate. A conventional vehicle seat has a three-point seat belt configuration in which a first point P1 and a second point P2 are fixed to a vehicle body, and a third point P3 is fixed to a seat.

However, in the case of a rotatable seat frame, such as a seat of an autonomous vehicle, all three points, including first, second and third points, must be fixed to a seat frame.
(Patent Document 1) KR 10-1998-0008730 A

### Summary of Invention

### Technical Problem

An aspect of the present invention is to provide a seat frame in which a path of a seat belt may be effectively regulated and stable load performance thereof may be secured.

### Solution to Problem

According to an aspect of the present invention to achieve the above-described object, provided is a seat back including: an upper frame; a first side frame coupled to one side of the upper frame; and a first belt bracket coupled to a section at which the upper frame and the first side frame are connected, and guiding the seat belt, wherein the first belt bracket includes: a front bracket disposed in front of the section at which the upper frame and the first side frame are connected; and a rear bracket manufactured so as to separable from the front bracket, coupled to the front bracket, and disposed behind the section at which the upper frame and the first side frame are connected.

An upper surface of the upper frame may have a straight section at a portion that enters the first belt bracket, and one side surface of the first side frame may have a straight section at the portion that enters the first belt bracket.

The front bracket may include: a front bracket body configured to guide the seat belt passing through the front; a first front flange formed to extend rearwards from one side surface of the front bracket body and coupled to a first rear flange of the rear bracket; and a second front flange formed to extend rearwards from one side surface of the front bracket body and coupled to the upper frame.

The first front flange may be coupled to an upper surface of the upper frame, and the second front flange may be coupled to a front surface of the upper frame.

The upper frame may have a reinforcing back plate that is coupled around a portion connected to the first side frame and reinforces the rear of the upper frame.

The rear bracket may include: a rear bracket body configured to guide the seat belt passing through the rear; a first rear flange formed to extend forwards from one side surface of the rear bracket body and coupled to the first front flange of the front bracket; a second rear flange formed to extend forwards from one side surface of the rear bracket body and coupled to a reinforcing back plate of the upper frame; and a third rear flange formed to extend downwards from a lower portion of the rear bracket body and coupled to the rear of the first side frame.

The front bracket and the rear bracket may have a vertical reinforcing rib protruding from an outer surface.

The seat back may further include : an insert panel formed to extend along the first side frame in a up-down direction, and coupled to the first side frame to form a closed cross-section.

A lower region of the front bracket may be coupled to cover the upper frame, the first side frame, and the insert panel.

The front bracket, the first side frame, and the upper frame may be coupled in an overlapping state in an upper region of the first side frame in a front-rear direction.

The seat back may further include: a support wire in which at least a portion thereof is disposed in a closed cross-section between the first side frame and the insert panel to reinforce rigidity.

The seat back may further include: a second side frame coupled to the other side of the upper frame; and a lower frame connecting the first side frame and the second side frame in a lower portion thereof in a left-right direction, wherein the support wire may be coupled to the first side frame and the lower frame.

The support wire may include: a first wire coupled to the first side frame; and a second wire coupled to the lower frame, and the first wire may include: a first-first wire formed to extend from an upper region of the first wire in a front-back direction; a first-second wire formed to extend downwards from a front end of the first-first wire; and a first-third wire formed in a lower region of the first wire and formed to extend from the first-second wire in a direction of the second wire.

The first-third wire may be coupled to the first side frame around a rotation point in which a coupling angle is adjusted by rotating a seat frame and the seat back of a vehicle seat.

The seat back may further include: a second side frame coupled to the other side of the upper frame; a lower frame connecting the first side frame and the second side frame in a lower portion thereof in a left-right direction; and a first reinforcing bracket coupled to the rear of the lower frame to form a closed cross-section and coupled to a rear belt tightener.

The seat back may further include: a second reinforcing bracket coupled to the front of the lower frame to form a closed cross-section.

### Advantageous Effects of Invention

According to an embodiment of the present invention, a path of the seat belt may be effectively regulated and stable load performance thereof may be secured.

### Brief Description of Drawings

FIG. 1 is a view illustrating a state in which a seat belt is fixed to a conventional vehicle seat.
FIG. 2 is a view illustrating a state in which a seat belt is fixed to a vehicle seat of the present invention.
FIG. 3 is a perspective view of a seat back of the present invention.
FIG. 4 is a perspective view of an exploded state of the seat back of FIG. 3.
FIG. 5 is a view of a first belt bracket portion of the seat back according to the present invention when viewed from the rear.
FIG. 6 is a cross-sectional view of a seat back of the present invention in a direction '1.'
FIG. 7 is a view of a first belt bracket portion of the seat back of the present invention when viewed from a front lower side.
FIG. 8 is a cross-sectional view of a seat back of the present invention in a direction '2.'
FIG. 9 is a view illustrating an installation state of a support wire for a seat back of the present invention.
FIG. 10 is a cross-sectional view of a seat back of the present invention in a direction '3.'
FIG. 11 is a cross-sectional view of a seat back of the present invention in a direction '4.'
FIG. 12 is a view of a first reinforcing bracket portion of the seat back of the present invention when viewed from the rear.

### Best Mode for Invention

Hereinafter, embodiments of the present invention will be described with reference to specific example embodiments and the attached drawings. The embodiments of the present invention may, however, be exemplified in many different forms and should not be construed as being limited to the specific embodiments set forth herein. The embodiments disclosed herein are provided for those skilled in the art to better explain the present invention. In the drawings, the shapes and dimensions of elements may be exaggerated for clarity.

Referring to the drawings, a seat back of the present invention is shown in a left-right direction, a up-down direction, and a front-back direction, and the terms left-right direction, up-down direction, and front-back direction are used in the detailed description of the invention, but this is for convenience of explanation, and it should be noted that the technical features of the seat back of the present invention are not limited to this direction.

Hereinafter, an X-axis illustrated in the attached drawings is a front-back direction of the seat back, a Y-axis is a left-right direction of the seat back, and a Z-axis is a up-down direction of the seat back.

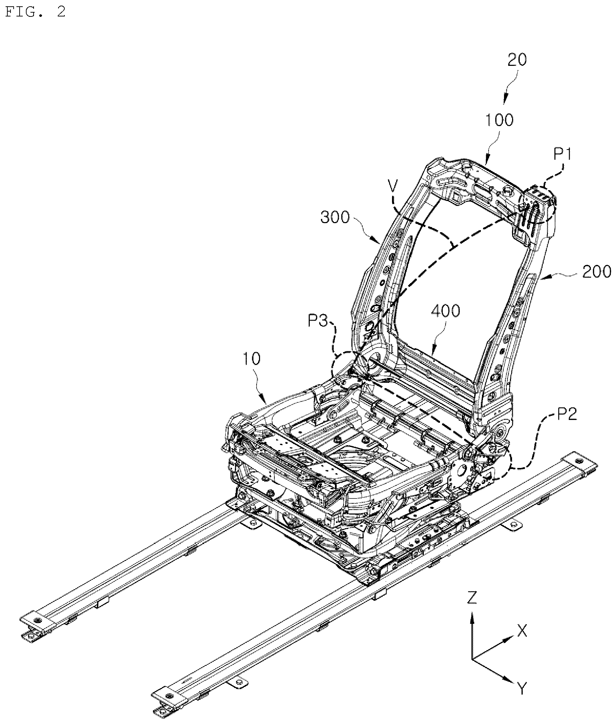

Hereinafter, with reference to FIGS. 2 to 4, components included in a seat back 20 according to an embodiment of the present invention will be described in detail.

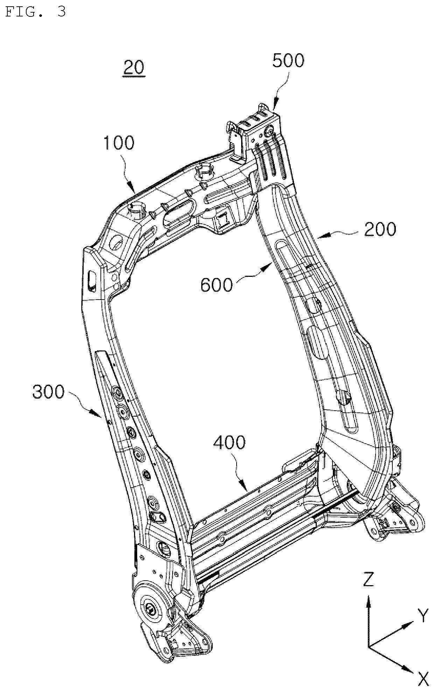

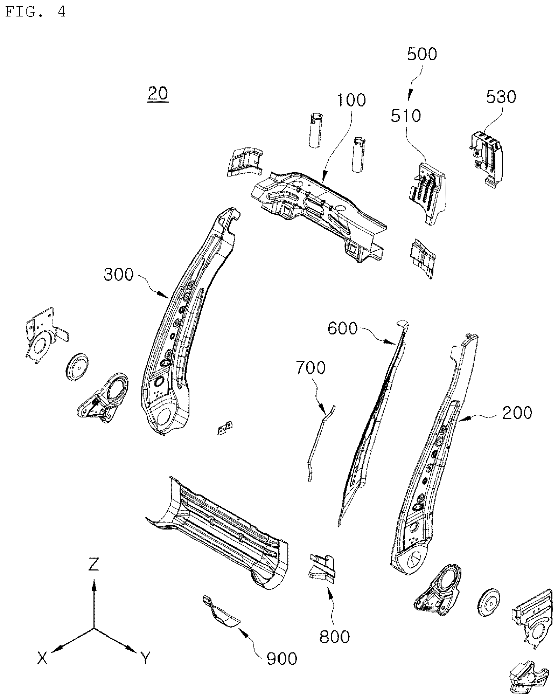

FIG. 2 is a view illustrating a state in which a seat belt V is fixed to a vehicle seat of the present invention, FIG. 3 is a perspective view of the seat back 20 of the present invention, and FIG. 4 is a perspective view of the seat back 20 of FIG. 3 in an exploded state.

The vehicle seat may include a seat frame 10 and a seat back 20.

A cushion may be installed on the seat frame 10 to support the passenger's hip, and the seat back 20 may support the passenger's back.

The seat back 20 may be connected to the seat frame 10, and the seat back 20 may be installed to adjust an angle thereof with the seat frame 10. Specifically, a first side frame 200 of the seat back 20 may be connected to the seat frame 10 in an angle-adjustable manner.

An upper frame 100 extends in the left-right direction, and the upper frame 100 may be spaced apart from a lower frame 400 to be described below, in a up-down direction. The upper frame 100 may connect the first side frame 200 and a second side frame 300 in an upper portion thereof in the left-right direction.

The first side frame 200 may be coupled to one side of the upper frame 100, and the first side frame 200 may extend in the up-down direction.

A first belt bracket 500 may be coupled to a section at which the upper frame 100 and the first side frame 200 are connected and may guide a seat belt V. The first belt bracket 500 may be installed on an upper portion of the seat back 20.

The first belt bracket 500 may support load of the seat belt V passing through the front and rear of the first belt bracket 500. The first belt bracket 500 may be coupled to the upper frame 100 and the first side frame 200 and may serve to reinforce the upper frame 100 and the first side frame 200.

The first belt bracket 500 may include a front bracket 510 and a rear bracket 530.

The front bracket 510 may be disposed in front of the section at which the upper frame 100 and the first side frame 200 are connected. The rear bracket 530 may be manufactured so as to be separable from the front bracket 510 and may be coupled to the front bracket 510, and may be disposed behind the section at which the upper frame 100 and the first side frame 200 are connected.

A belt guide G1 may be installed on an upper portion of the rear bracket 530 to limit a left and right movement of the seat belt V. A ring-shaped space through which the seat belt V passes may be formed in the belt guide G1.

A seat to which the seat back 20 of the present invention is applied may be provided with a three-point seat belt V (see FIG. 2), and the seat frame 10 may be configured to rotate, so that all three points including a first point P1, a second point P2, and a third point P3 that regulate a path of the seat belt V may be installed on a seat itself.

The first point of the three points regulating the path of the seat belt V may be formed on the first belt bracket 500, and the second point and the third point of the three points may be formed on a left side and a right side of the seat frame 10.

An upper surface of the upper frame 10 may have a straight section at a portion that enters the first belt bracket 500, and one side surface of the first side frame 200 may have a straight section at the portion that enters the first belt bracket 500.

Accordingly, a size of the first belt bracket 500 may be reduced, thereby reducing a weight thereof. Additionally, as the upper surface of the upper frame 100 has a straight section, it may be possible to reduce a weight of the upper frame 100.

The upper surface of the upper frame 100 may have a straight section around a first entry point in which the upper frame 100 enters the first belt bracket 500, and one side surface of the first side frame 200 may have a straight section around a second entry point in which the first side frame 200 enters the first belt bracket 500.

For example, the upper frame 100 may extend in the left-right direction, and the upper surface of the upper frame 100 may be comprised of a straight section for at least half of a length of the upper frame 100 in the left-right direction.

For example, the first side frame 200 may be formed to extend in the up-down direction, and one side surface of the first side frame 200 may be comprised of a straight section for at least half of the first side frame 200 in the vertical length.

Here, a straight section may be a concept that includes a perfectly straight line and a general straight section having a slight bend in a straight direction.

The front bracket 510 may include a front bracket body 511, a first front flange 513, and a second front flange 515.

The front bracket body 511 may guide the seat belt V passing through the front.

The first front flange 513 may be formed to extend rearwards from one side surface of the front bracket body 511 and may be coupled to a first rear flange 533 of the rear bracket 530. The first front flange 513 may be simultaneously coupled to the first rear flange 533 and the upper frame 100. The upper surface of the upper frame 100, the first front flange 513, and the first rear flange 533 may be coupled in an overlapping state from a lower side thereof to an upper side thereof.

The first front flange 513 may include a first front reversing plate 513a formed to extend rearwards from one side surface of the front bracket body 511 and coupled to a first rear advancing plate 533a of the first rear flange 533, and a first front coupling plate 513b formed to extend in a direction crossed from a lower side of the first front reversing plate 513a to the right and coupled to the upper surface of the upper frame 100.

The second front flange 515 may be formed to extend rearwards from one side surface of the front bracket body 511 and may be coupled to the upper frame 100. The second front flange 515 may be coupled to a front surface of the upper frame 100.

The first front flange 513 may be coupled to the upper surface of the upper frame 100, and the second front flange 515 may be coupled to the front surface of the upper frame 100.

The first front flange 513 may include a first front reversing plate 513a formed to extend rearwards from one side surface of the front bracket body 511 and coupled to the first rear flange 533, and a first front coupling plate 513b formed to extend in a direction crossed from the lower side of the first front reversing plate 513a to the right and coupled to the upper surface of the upper frame 100.

For example, the second front flange 515 may be coupled together to a front surface and a lower surface of the upper frame 100.

The upper frame 100 may have a reinforcing back plate 110 installed around a portion connected to the first side frame 200 to reinforce the rear of the upper frame 100. The reinforcing back plate 110 may also be installed around a portion connected to the second side frame 300 to reinforce the rear of the upper frame 100.

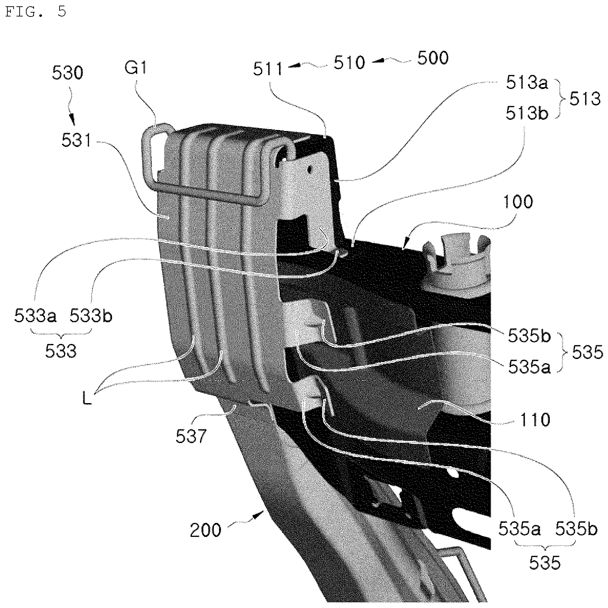

FIG. 5 is a view of a first belt bracket 500 of a seat back 20 of the present invention when viewed from the rear.

The rear bracket 530 may include a rear bracket body 531, a first rear flange 533, a second rear flange 535, and a third rear flange 537.

The rear bracket body 531 can guide the seat belt V passing through the rear.

The first rear flange 533 may be formed to extend forwards from one side surface of the rear bracket body 531 and may be coupled to the first front flange 513 of the front bracket 510.

The first rear flange 533 may be disposed on an upper side of the rear bracket body 531 in the up-down direction, and the second rear flange 535 may be disposed on a lower side of the rear bracket body 531 in the up-down direction. The second rear flange 535 and the first rear flange 533 may be spaced apart in the up-down direction. For example, two second rear flanges 535 may be spaced apart from each other, and one first rear flange 533 may be disposed.

The first rear flange 533 may include a first rear advancing plate 533a formed to extend forwards from one side surface of the rear bracket body 531 and coupled to the first front reversing plate 513a, and a first rear coupling plate 533b formed to extend in a direction crossed from a lower side of the first rear advancing plate 533a to the right and coupled to the first front coupling plate 513b of the first front flange 513.

The first rear coupling plate 533b may be coupled to the upper side of the first front coupling plate 513b coupled to the upper surface of the upper frame 100. For example, the upper surface of the upper frame 100, the first front coupling plate 513b and the first rear coupling plate 533b may be coupled by welding or joint from the bottom to the top, while being overlapped in a thickness direction.

The second rear flange 535 may be formed to extend forwards from one side surface of the rear bracket body 531, and may be coupled to the reinforcing back plate 110 of the upper frame 100.

The second rear flange 535 may include a second rear advancing plate 535a formed to extend forwards from one side surface of the rear bracket body 531, and a second rear coupling plate 535b formed to extend in a direction crossed outwards from the second rear advancing plate 535a and coupled to the reinforcing back plate 110.

An open space may be formed between adjacent second rear flanges 535 and between the second rear flange 535 and the first rear flange 533, thereby reducing the weight of the first belt bracket 500.

The third rear flange 537 may be formed to extend downwards from a lower portion of the rear bracket body 531 and may be coupled to the rear of the first side frame 200.

The front bracket 510 and the rear bracket 530 may have vertical reinforcing ribs L protruding from outer surfaces thereof.

The vertical reinforcing rib L may be formed to protrude from the front bracket 510 and the rear bracket 530 and may be formed to extend in the up-down direction. A plurality of vertical reinforcing ribs L may be installed to be spaced apart from each other in the left-right direction. For example, three vertical reinforcing ribs L may be spaced apart from each other in the left-right direction.

The vertical reinforcing ribs L may be formed to protrude from the outer surfaces of the front bracket 510 and the rear bracket 530, thereby reinforcing the rigidity of the front bracket 510 and the rear bracket 530.

Furthermore, the vertical reinforcing rib L formed on the rear bracket 530 may serve to reinforce rigidity thereof and may also serve to prevent the seat belt V from sliding in the left-right direction.

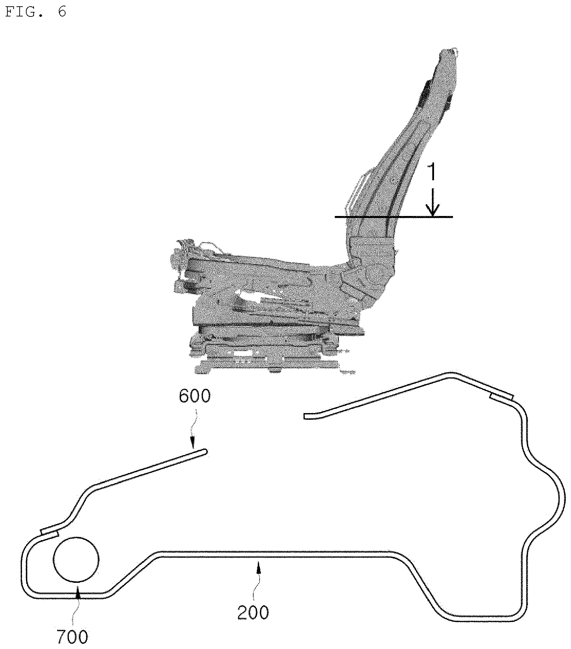

FIG. 6 is a cross-sectional view of a seat back 20 of the present invention in a direction '1.'

The seat back 20 of the present invention may further include an insert panel 600.

The insert panel 600 may be formed to extend along the first side frame 200 in the up-down direction, and may be coupled to the first side frame 200 to form a closed cross-section.

The first side frame 200 and the second side frame 300 have an open cross-section in which an interior of the seat back 20 in the left-right direction are open, and the insert panel 600 may be coupled to the first side frame 200 and may form a closed cross-section with the first side frame 200 in a width direction of the seat back 20.

The insert panel 600 may be coupled to the first side frame 200 to form a closed cross-section, thereby securing rigidity that may handle anchorage tests of the seat belt V under harsh conditions.

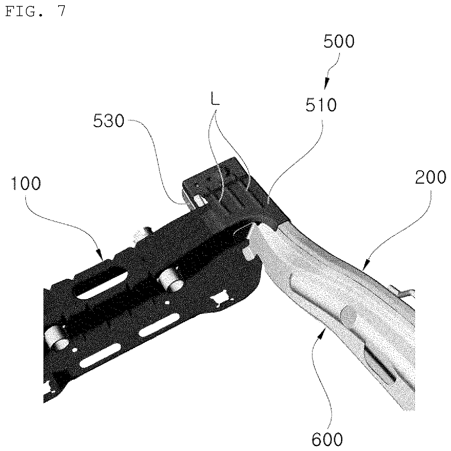

FIG. 7 is a view of a first belt bracket 500 of the seat back 20 of the present invention when viewed from a front lower side thereof.

The front bracket 510 may be coupled so that a lower region thereof covers the upper frame 100, the first side frame 200, and the insert panel 600. Accordingly, the front bracket 510 may be coupled to the upper frame 100, the first side frame 200, and the insert panel 600 and may be stably supported and may simultaneously guide the seat belt V.

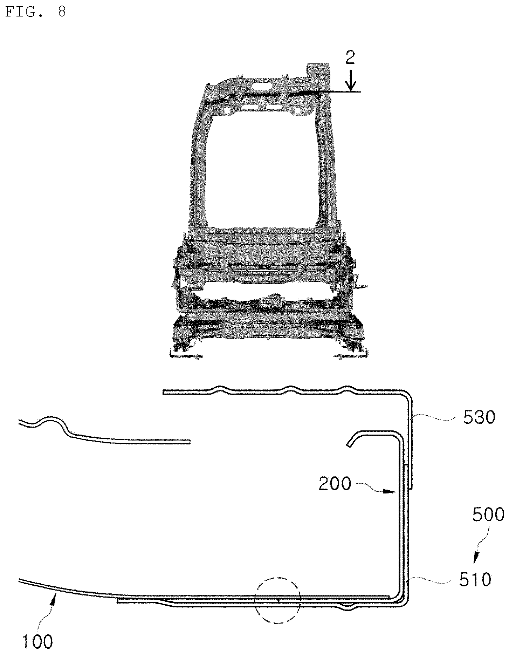

FIG. 8 is a cross-sectional view of the seat back 20 of the present invention in a direction '2.'

A front bracket 510, a first side frame 200, and an upper frame 100 may be coupled in an overlapping state in an upper region of the first side frame 200 in the front-back direction.

A second overlap region in which the front bracket 510, the first side frame 200, and the upper frame 100 overlap each other may be formed in the upper region of the first side frame 200 in the front-back direction.

In a state in which the front bracket 510, the first side frame 200, and the upper frame 100 are disposed to overlap each other from the front to the rear, the front bracket 510, the first side frame 200, and the upper frame 100 may be coupled by welding or joining in the thickness direction.

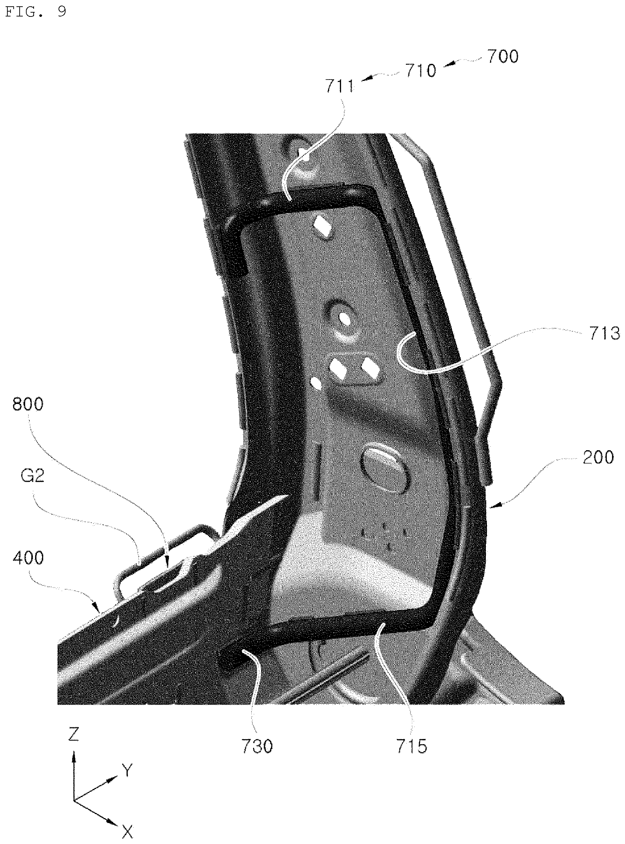

FIG. 9 is a view illustrating an installation state of a support wire 700 of a seat back 20 of the present invention.

The seat back 20 of the present invention may further include a support wire 700.

At least a portion of the support wire 700 may be disposed in a closed cross-section between the first side frame 200 and the insert panel 600 to reinforce rigidity.

The first side frame 200 and the insert panel 600 may be coupled to form a closed cross-section to primarily reinforce rigidity, and at least a portion of the support wire 700 may be disposed between the first side frame 200 and the insert panel 600 to secondarily reinforce rigidity, thereby securing rigidity that may handle anchorage tests of the seat belt V under harsh conditions.

The seat back 20 of the present invention may further include a second side frame 300 and a lower frame 400.

The second side frame 300 may be coupled to the other side of the upper frame 100. The second side frame 300 may be formed to extend in the up-down direction, and the second side frame 300 may be spaced apart from the first side frame 200 in the left-right direction.

The lower frame 400 may connect the first side frame 200 and the second side frame 300 in a lower portion thereof in the left-right direction. The lower frame 400 may be formed to extend in the left-right direction, and the lower frame 400 may be spaced apart from the upper frame 100 in the up-down direction.

The support wire 700 may be coupled to the first side frame 200 and the lower frame 400. The support wire 700 may be coupled to the first side frame 200 and may be simultaneously coupled to the lower frame 400, which has an effect of reinforcing the rigidity of the section at which the first side frame 200 and the lower frame 400 are connected.

The support wire 700 may include a first wire 710 and a second wire 730, and the first wire 710 may include a first-first wire 711, a first-second wire 713, and a first-third wire.

The first wire 710 may be coupled to the first side frame 200, and the second wire 730 may be coupled to the lower frame 400.

The first-first wire 711 may be formed to extend from an upper region of the first wire 710 in the front-back direction, and may be coupled to an inner surface of the first side frame 200. The first-second wire 713 may be formed to extend downwards from a front end of the first-first wire 711 and may be coupled to the inner surface of the first side frame 200. The first-third wire 715 may be formed in a lower region of the first wire 710, and may be formed to extend from the first-second wire 713 to a direction of the second wire 730.

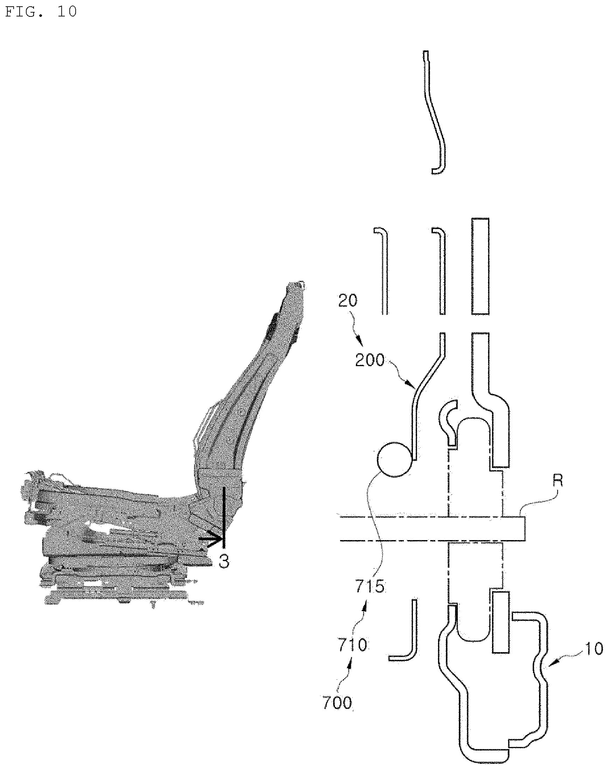

FIG. 10 is a cross-sectional view of a seatback 20 of the present invention in a direction '3.'

The first-third wire 715 may be coupled to the first side frame 200 around a rotation point R in which a coupling angle is adjusted by rotating a seat frame 10 and the seat back 20 of a vehicle seat.

The support wire 700 may be coupled to the first side frame 200 of the seat back 20 around a connection section with the seat frame 10, thereby reinforcing the rigidity of the section at which the seatback 20 and the seat frame 10 are connected.

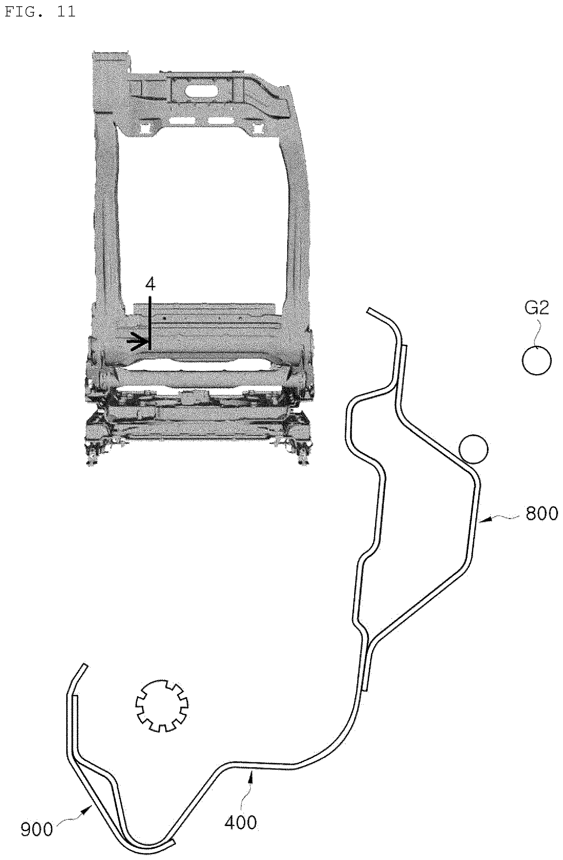

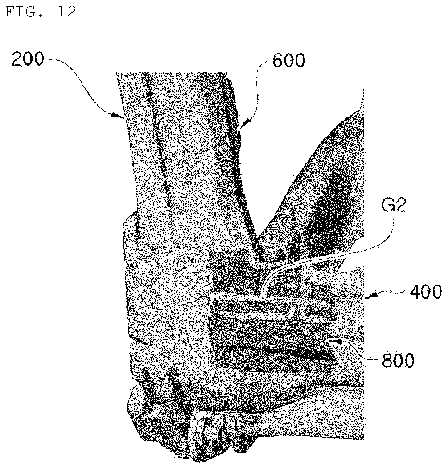

FIG. 11 is a cross-sectional view of the seatback 20 of the present invention in a direction '4,' and FIG. 12 is a view of the first reinforcing bracket portion of the seatback of the present invention viewed from the rear.

The seat back 20 of the present invention may further include a second side frame 300, a lower frame 400, and a first reinforcing bracket 800.

The first reinforcing bracket 800 may be coupled to the rear of the lower frame 400 to form a closed cross-section, and a rear belt tightener G2 may be coupled thereto. The first reinforcing bracket 800 may be coupled to the rear of the lower frame 400, and the rear belt tightener G2 may be coupled to the rear of the first reinforcing bracket 800.

The first reinforcing bracket 800 may be coupled to the rear of the lower frame 400 to form a closed cross-section with the lower frame 400, thereby reinforcing rigidity of the rear of the lower frame 400.

One end of the seat belt V may be fixed to the rear belt tightener G2. A ring-shaped space in which one end of the seat belt V is fixed may be formed in the rear belt tightener G2, and the seat belt V may be fixed while penetrating through the ring-shaped space of the rear belt tightener G2.

The seat back 20 of the present invention may further include a second reinforcing bracket 900.

The second reinforcing bracket 900 may be coupled to the front of the lower frame 400 to form a closed cross-section.

For example, the first reinforcing bracket 800 may be coupled to the rear of the lower frame 400 to reinforce rigidity of the rear of the lower frame 400, and the second reinforcing bracket 900 may be coupled to the front of the lower frame 400 to reinforce rigidity of the front of the lower frame 400.

The first reinforcing bracket 800 may be coupled to the rear of the lower frame 400 to form a closed cross-section with the lower frame 400 to reinforce the rigidity of the rear of the lower frame 400, and the second reinforcing bracket 900 may be coupled to the front of the lower frame 400 to form a closed cross-section with the lower frame 400 to reinforce the rigidity of the front of the lower frame 400.

Although the example embodiment of the present disclosure has been described in detail above, it will be obvious to those skilled in the art that the scope of the present disclosure is not limited thereto, and various modifications and variation may be made without departing from the technical concept of the present disclosure described in the claims.

### Description of Reference Characters

10: Seat Frame 20: Seat Back
100: Upper Frame 110: Reinforcing Back Plate
200: First Side Frame 300: Second Side Frame
400: Lower Frame 500: First Belt Bracket
510: Front Bracket 511: Front Bracket Body
513: First Front Flange 513a: First Front Reversing Plate
513b: First Front Coupling Plate 515: Second Front Flange
530: Rear Bracket 531: Rear Bracket Body
533: First Rear Flange 533a: First Rear Advancing Plate
533b: First Rear Coupling Plate 535: Second Rear Flange
535a: Second Rear Advancing Plate 535b: Second Rear Coupling Plate
537: Third Rear Flange 600: Insert Panel
700: Support Wire 710: First Wire
711: First-First Wire 713: First-Second Wire
715: First-Third Wire 730: Second Wire
800: First Reinforcing Bracket 900: Second Reinforcing Bracket
G1: Belt Guide G2: Rear Belt Tightener
L: Vertical Reinforcing Rib P1: First Point
P2: Second Point P3: Third Point
R: Rotation Point V: Seat Belt

## Claims

1. A seat back comprising:
an upper frame;
a first side frame coupled to one side of the upper frame; and
a first belt bracket coupled to a section at which the upper frame and the first side frame are connected, and guiding the seat belt,
wherein the first belt bracket comprises:
a front bracket disposed in front of the section at which the upper frame and the first side frame are connected; and
a rear bracket manufactured so as to separable from the front bracket, coupled to the front bracket, and disposed behind the section at which the upper frame and the first side frame are connected.

2. The seat back of claim 1, wherein an upper surface of the upper frame has a straight section at a portion that enters the first belt bracket, and
one side surface of the first side frame has a straight section at the portion that enters the first belt bracket.

3. The seat back of claim 1, wherein the front bracket comprises:
a front bracket body configured to guide the seat belt passing through the front;
a first front flange formed to extend rearwards from one side surface of the front bracket body and coupled to a first rear flange of the rear bracket; and
a second front flange formed to extend rearwards from one side surface of the front bracket body and coupled to the upper frame.

4. The seat back of claim 3, wherein the first front flange is coupled to an upper surface of the upper frame, and the second front flange is coupled to a front surface of the upper frame.

5. The seat back of claim 1, wherein the upper frame has a reinforcing back plate that is coupled around a portion connected to the first side frame and reinforces the rear of the upper frame.

6. The seat back of claim 3, wherein the rear bracket comprises:
a rear bracket body configured to guide the seat belt passing through the rear;
a first rear flange formed to extend forwards from one side surface of the rear bracket body and coupled to the first front flange of the front bracket;
a second rear flange formed to extend forwards from one side surface of the rear bracket body and coupled to a reinforcing back plate of the upper frame; and
a third rear flange formed to extend downwards from a lower portion of the rear bracket body and coupled to the rear of the first side frame.

7. The seat back of claim 1, wherein the front bracket and the rear bracket have a vertical reinforcing rib protruding from an outer surface.

8. The seat back of claim 1, further comprising:
an insert panel formed to extend along the first side frame in a up-down direction, and coupled to the first side frame to form a closed cross-section.

9. The seat back of claim 8, wherein a lower region of the front bracket is coupled to cover the upper frame, the first side frame, and the insert panel.

10. The seat back of claim 1, wherein the front bracket, the first side frame, and the upper frame are coupled in an overlapping state in an upper region of the first side frame in a front-rear direction.

11. The seat back of claim 8, further comprising:
a support wire in which at least a portion thereof is disposed in a closed cross-section between the first side frame and the insert panel to reinforce rigidity.

12. The seat back of claim 11, further comprising:
a second side frame coupled to the other side of the upper frame; and
a lower frame connecting the first side frame and the second side frame in a lower portion thereof in a left-right direction,
wherein the support wire is coupled to the first side frame and the lower frame.

13. The seat back of claim 12, wherein the support wire comprises:
a first wire coupled to the first side frame; and
a second wire coupled to the lower frame,
wherein the first wire comprises:
a first-first wire formed to extend from an upper region of the first wire in a front-back direction;
a first-second wire formed to extend downwards from a front end of the first-first wire; and
a first-third wire formed in a lower region of the first wire and formed to extend from the first-second wire in a direction of the second wire.

14. The seat back of claim 13, wherein the first-third wire is coupled to the first side frame around a rotation point in which a coupling angle is adjusted by rotating a seat frame and the seat back of a vehicle seat.

15. The seat back of claim 1, further comprising:
a second side frame coupled to the other side of the upper frame;
a lower frame connecting the first side frame and the second side frame in a lower portion thereof in a left-right direction; and
a first reinforcing bracket coupled to the rear of the lower frame to form a closed cross-section and coupled to a rear belt tightener.

16. The seat back of claim 15, further comprising:
a second reinforcing bracket coupled to the front of the lower frame to form a closed cross-section.
